# EUROPEAN PATENT APPLICATION

(11) **EP 4 772 423 A1**
(43) Date of publication of application: **08.07.2026**
(21) Application number: 24891005.1
(22) Date of filing: 09.07.2024
(51) Int. Cl.: B62D 25/20, B62D 21/15

(54) **SIDE SILL STRUCTURE OF AUTOMOBILE**

(30) Priority: 17.11.2023 JP 2023195903
(71) Applicant: JFE Steel Corporation, Tokyo, 100-0011 (JP)
(72) Inventor: ISHIKAWA, Toshiharu, Tokyo 100-0011 (JP)
(74) Representative: Grünecker Patent- und Rechtsanwälte PartG mbB
(86) International application number: PCT/JP2024/024723
(87) International publication number: WO 2025/104960

(57) **Abstract**

An impact-absorbing structure 2 is disposed in a closed sectional space 3 of the side sill 1. The impact-absorbing structure 2 includes a cross-section hollow member 4 that is provided along a vehicle front-rear direction in the closed sectional space 3 so as to vertically partition the closed sectional space 3, and a bulkhead 6 that is provided along a vehicle width direction in a closed sectional space 5 of the cross-section hollow member 4, so as to partition the closed sectional space 5, in a plurality of locations spaced apart in a vehicle longitudinal direction in the closed sectional space 5. The bulkhead 6 is joined to an inner wall of the cross-section hollow member 4.

## Description

### Field

The present invention relates to a side sill structure of a vehicle body side part of a vehicle, and particularly to a side sill structure suitable for a vehicle including a battery module below a floor panel between both side sills.

### Background

In general, a battery module is mounted below a floor panel of an electric vehicle. The battery module includes a battery cell (battery pack) and a battery case for housing the battery cell. In general, the battery case has a role of protecting the battery cell from an impact load, and a member having high rigidity and high proof stress (high durability) is used. A member having a role of absorbing energy by deformation of the member itself is arranged around the battery case. In particular, in the case of a side collision, the side sill absorbs energy of the impact load from the side of the vehicle body, and a remaining load is supported by a floor cross member or a battery case side member. At this time, when an amount of deformation necessary for energy absorption by the side sill is small, an energy absorbing portion can be reduced, and a volume of the battery module can be expanded instead, leading to an increase in a traveling distance. From the above, a lightweight side sill structure having excellent collision energy absorption property is required.

As a conventional technique for enhancing the stiffness of the side sill to enhance the collision energy absorption property at the time of side collision, for example, there are the following techniques. Patent Literature 1 discloses a technique in which a bulkhead is provided in a vehicle width direction inside (closed sectional space) of a side sill of a closed cross section structure forming a side surface of a vehicle body to prevent cross section collapse of the side sill at the time of side collision of the side sill. A flange is formed on an outer periphery of the bulkhead and is welded and fixed to a reinforcement in the side sill. In addition, Patent Literatures 2 and 3 disclose techniques in which, in a structure having the closed sectional space in the side sill partitioned into two closed sectional spaces in the vehicle width direction by a partition member (stiffener) that vertically passes through the inside of the side sill, a plurality of bulkheads are provided in the vehicle width direction in the closed sectional space in the side sill, and the bulkheads and the partition member are combined to prevent the cross section collapse of the side sill at the time of side collision. In these techniques, the partition member is provided to prevent the cross section collapse due to opening of the side sill in a vertical direction at the time of side collision. In Patent Literature 2, the bulkhead is disposed in a space only one side of the closed sectional space with the partition member sandwiched therebetween in the side sill. On the other hand, in Patent Literature 3, the bulkhead is disposed in both sides of the closed sectional space with the partition member sandwiched therebetween in the side sill.

In addition, Patent Literature 4 discloses a technique in which, in a structure having the closed sectional space in the side sill partitioned into two closed sectional spaces in the vehicle width direction by a partition member that vertically passes through the inside of the side sill, an impact absorption member having a hat-shaped cross section is arranged on both sides of the partition member (inside and outside of the partition member). In addition, Patent Literature 5 discloses a technique in which the impact absorption member has a plurality of ridge portions spaced apart in the vehicle width direction and a vertical wave-shape along a vehicle front-rear direction in the closed sectional space in the side sill, thereby suppressing local deformation while maintaining impact absorbing capability.

### Citation List

### Patent Literature

Patent Literature 1: JP H10-59218 A
Patent Literature 2: JP 2009-202620 A
Patent Literature 3: JP 2013-49378 A
Patent Literature 4: JP 2017-226353 A
Patent Literature 5: JP 2021-146973 A
Patent Literature 6: JP 2023-78067 A

### Summary

### Technical Problem

Since the technique disclosed in Patent Literature 1 has a structure in which the bulkhead is easily buckled, buckling of the bulkhead easily occurs at the time of side collision, and when buckling of the bulkhead starts to occur, a cross section collapse of the side sill occurs. Therefore, appropriate collision energy absorption property cannot be obtained. Further, as in the techniques disclosed in Patent Literatures 2 and 3, in a side sill having a partition member, sufficient collision energy absorption characteristics cannot be obtained even when a bulkhead is disposed in a closed sectional space in the side sill. In particular, in the technique disclosed in Patent Literature 2, since the bulkhead is disposed only in one closed sectional space with the partition member sandwiched therebetween, the bulkhead has only a function of maintaining a cross-sectional shape of that one closed sectional space, and sufficient collision energy absorption characteristics cannot be obtained. Even when the bulkhead is disposed in both spaces with the partition member sandwiched therebetween as in the technique disclosed in Patent Literature 3, the collision energy absorption characteristics obtained are not sufficient.

Further, in the technique disclosed in Patent Literature 3, it is necessary to provide a slit in the partition member in order to insert the bulkhead. When a plurality of bulkheads are installed in a longitudinal direction of the side sill, an installation interval of the bulkheads cannot be lengthened in order to avoid a decrease in the strength of the partition member due to the provision of the slit. Therefore, there is a problem that the number of bulkheads to be installed increases, leading to an increase in weight. Further, as in the technique disclosed in Patent Literature 4, in the side sill having the partition member, sufficient collision energy absorption characteristics cannot be obtained simply by arranging the impact absorption member having a hat-shaped cross section on both sides of the partition member (inside and outside of the partition member). In addition, the technique disclosed in Patent Literature 5 can uniformly transfer an impact load at the time of side collision while dispersing the impact load in a cross section perpendicular to the vehicle width direction, so that high collision energy absorption characteristics can be obtained. However, in a side sill inner reinforcing member having a constant cross section in the vehicle front-rear direction, since a stiffened member is also present in a portion that does not need stiffening, the weight may be excessive.

In contrast to the conventional techniques described above, Patent Literature 6 discloses the technique of providing an impact-absorbing structure having a specific structure in the closed sectional space using the partition member that vertically passes through the closed sectional space in the side sill. The impact-absorbing structure includes a pair of cross-section grooved members (sectionally groove-shaped members) joined to each other with the partition member sandwiched therebetween from both sides, and a plurality of bulkheads provided in two closed sectional spaces formed between the cross-section grooved member and the partition member under a predetermined condition. According to this technique, it is possible to provide a side sill structure capable of obtaining high collision energy absorption characteristics with a small collision deformation amount. In addition, since the impact-absorbing structure can obtain high bending stiffness with a small number of components, an increase in weight of the vehicle body due to the components can also be suppressed. On the other hand, it has been found that the side sill structure has the following problems.

Although the bulkhead on a vehicle outer side and the bulkhead on a vehicle inner side are provided to face each other in the vehicle width direction with the partition member sandwiched therebetween, it is necessary to accurately align positions of both bulkheads, and strict assembly accuracy is required. This is because, when both bulkheads are slightly misaligned in the vehicle front-rear direction in assembly, a load transfer amount may decrease, and desired collision energy absorption characteristics may not be obtained. Therefore, it takes time and effort to assemble, and the manufacturing cost increases in combination with an increase in assembly man-hours. In addition, since the impact-absorbing structure has a structure in which a pair of cross-section grooved members are joined to each other with the partition member sandwiched therebetween from both sides, the form of the partition member is restricted, and weight reduction of the vehicle body may be hindered. For example, the partition member may be drilled for weight reduction when a tensile load can be secured, but there is a case where drilling cannot be performed in order to join the cross-section grooved members. As a result, weight reduction of the vehicle body is hindered. Further, since the pair of cross-section grooved members are joined to the partition member via a flange, it is necessary to create a gap (space) in a vehicle vertical direction for a flange width. As a result, a degree of freedom in designing the impact-absorbing structure may decrease, including a shorter vertical dimension of the impact-absorbing structure and a restricted vertical position in the side sill.

The present invention has been made to solve the above problems, and an object of the present invention is to provide an automotive side sill structure that can obtain high collision energy absorption characteristics with a small collision deformation amount while suppressing an increase in weight due to a structural member, that can be easily assembled with less assembly man-hours, and that can also be advantageous for increasing a degree of freedom in designing an impact-absorbing structure.

### Solution to Problem

The inventors of the present invention, after repeated studies to solve the above problems, found that the problems could be solved by providing an impact-absorbing structure of a specific configuration within the closed cross-sectional space of the side sill, without interposing a partition member (a member sandwiched between the side sill outer and side sill inner, partitioning the closed cross-sectional space of the side sill into an outer side and an inner side; the same applies hereinafter). Specifically, the structure includes a cross-section hollow member (sectionally hollow-shaped member) provided along the vehicle longitudinal direction to partition the closed sectional space of the side sill vertically, and a plurality of bulkheads provided within the closed cross-sectional space of the cross-section hollow member under specified conditions. By providing this impact-absorbing structure, which has an integrated structure formed by joining these components, it was found that high energy absorption performance can be achieved while suppressing weight increase due to structural members, and that the problem of the prior art (particularly Patent Literature 6) described above can also be resolved. The present invention is based on these findings and is summarized as follows.

An automotive side sill structure according to the present invention includes: a side sill (1) extending in a vehicle front-rear direction on both sides of a vehicle lower part; and an impact-absorbing structure (2) disposed in a closed sectional space (3) in the side sill (1), wherein the impact-absorbing structure (2) includes: a cross-section hollow member (4) whose inside forms a closed sectional space (5), the cross-section hollow member (4) being provided along the vehicle front-rear direction in the closed sectional space (3) so as to vertically partition the closed sectional space (3), and bulkheads (6) provided along a vehicle width direction in the closed sectional space (5) of the cross-section hollow member (4) in a plurality of locations spaced apart in a vehicle longitudinal direction in the closed sectional space (5) so as to partition the closed sectional space (5), and each of the bulkheads (6) is joined to an inner wall of the cross-section hollow member (4).

Each of the bulkhead (6) may be joined to, among inner walls of the cross-section hollow member (4), at least an inner wall of a longitudinal surface portion (40) on a vehicle inner side and an inner wall of an upper lateral surface portion (41A) and/or an inner wall of a lower lateral surface portion (41B).

The bulkheads (6) may include bulkheads (6ₓ) provided in an area that is within a width of a floor cross member in the vehicle front-rear direction, and a bulkhead (6_{y}) provided in an area that is outside the width of the floor cross member, in the vehicle front-rear direction, the bulkheads (6ₓ) may be provided in two or more locations in the area that is within the width of the floor cross member, and the bulkhead (6_{y}) may be provided in one or more locations in the area that is outside the width of the floor cross member, and when two adjacent bulkheads (6ₓ) are provided at an interval of w1 and the bulkhead (6ₓ) and the bulkhead (6_{y}) adjacent to the bulkheads (6ₓ) are provided at an interval of w2, w1 < w2 may be satisfied.

At least a part of the bulkheads (6_{y}) may be a bulkhead set including two or more bulkheads adjacent to each other.

The longitudinal surface portion (40) of the cross-section hollow member (4) and a longitudinal surface portion (100) of the side sill (1) facing the longitudinal surface portion (40) may be joined.

The longitudinal surface portion (40) of the cross-section hollow member (4) and the longitudinal surface portion (100) of the side sill (1) facing the longitudinal surface portion (40) may abut on each other or face each other at a predetermined interval, and the cross-section hollow member (4) may be supported by the side sill (1) via a support structure (15).

A bead may be formed on a lateral surface portion (41) of the cross-section hollow member (4) and/or the bulkheads (6).

The impact-absorbing structure (2) may be formed of a metal plate having a tensile strength of not less than 590 MPa grade.

### Advantageous Effects of Invention

In an automotive side sill structure according to the present invention, an impact-absorbing structure 2 having a specific structure is provided in a closed sectional space 3 of a side sill 1, so that high collision energy absorption characteristics can be obtained with a small collision deformation amount. For this reason, when the present invention is applied to a vehicle including a battery module between both side sills, such as an electric vehicle, there is an advantage that a space required for energy absorption can be reduced and a volume of the battery module can be expanded. In addition, since the impact-absorbing structure 2 is provided in the closed sectional space of the side sill without interposing a partition member, and high bending stiffness can be obtained with the minimum necessary components, an increase in weight of the vehicle body by components of the side sill structure including the impact-absorbing structure 2 can also be suppressed. Still more, since the impact-absorbing structure 2 is provided in the closed sectional space 3 of the side sill 1 without interposing the partition member, and each bulkhead 6 provided in a cross-section hollow member 4 is an integrated single component in a vehicle width direction, a load transfer in the vehicle width direction is reliably performed, and desired collision energy absorption characteristics can be appropriately obtained. Still more, since the bulkheads 6 are integrated in the vehicle width direction to form a single component, there is an advantage that the impact-absorbing structure 2 is easily assembled and the assembly man-hours are reduced. Further, since the cross-section hollow member 4 is installed without interposing the partition member, it is not necessary to provide upper and lower flanges for joining to the partition member. Therefore, it is not necessary to form a gap (space) corresponding to the flange above and below the cross-section hollow member 4, and thus there is an advantage that a degree of freedom in designing the impact-absorbing structure 2 is increased. As a result, it is possible to increase the dimension of the impact-absorbing structure 2 in the vehicle vertical direction and to reduce a vertical positional restriction inside the side sill 1.

### Brief Description of Drawings

[FIG. 1] FIG. 1 schematically illustrates an embodiment of an automotive side sill structure according to the present invention, and is a longitudinal sectional view of a side sill in a vehicle width direction.
[FIG. 2] FIG. 2 is a cross-sectional view taken along line II-II in FIG. 1.
[FIG. 3] FIG. 3 is a longitudinal sectional view of a vehicle body side part including the side sill in the vehicle width direction in the embodiment in FIG. 1.
[FIG. 4] FIG. 4 is a component development view of the embodiment of an automotive side sill structure according to the present invention.
[FIG. 5] FIG. 5 is an explanatory diagram illustrating, in a developed manner, a floor panel, a floor cross member, and a battery case arranged between both side sills of a vehicle body.
[FIG. 6] FIG. 6 is an explanatory diagram illustrating another arrangement example of a bulkhead in the automotive side sill structure according to the present invention.
[FIG. 7] FIG. 7 is an explanatory diagram illustrating another arrangement example of the bulkhead in the automotive side sill structure according to the present invention.
[FIG. 8] FIG. 8 is a diagram illustrating a width wa of the floor cross member according to the present invention.
[FIG. 9] FIG. 9 is a diagram (cross-sectional view of the side sill) illustrating a width We of an impact-absorbing structure and a width Ws of the side sill in the vehicle width direction with respect to the embodiment in FIG. 1.
[FIG. 10] FIG. 10 schematically illustrates another embodiment of the automotive side sill structure according to the present invention, and is a longitudinal sectional view of the side sill in the vehicle width direction.
[FIG. 11] FIG. 11 is an explanatory diagram illustrating a support structure example of the impact-absorbing structure in the automotive side sill structure according to the present invention.
[FIG. 12] FIG. 12 schematically illustrates another embodiment of the automotive side sill structure according to the present invention, and is a longitudinal sectional view of the side sill in the vehicle width direction.
[FIG. 13] FIG. 13 is an explanatory diagram illustrating a structural example of a cross-section hollow member configuring the impact-absorbing structure in the automotive side sill structure according to the present invention.
[FIG. 14] FIG. 14 is an explanatory diagram illustrating, in a stepwise manner, a state of deformation at the time of side pole crash in a horizontal cross section of the automotive side sill structure according to the present invention.
[FIG. 15] FIG. 15 is a graph illustrating a relationship between an intrusion amount of a collision object (pole) and absorbed energy when the automotive side sill structure according to the present invention is deformed by side pole crash.
[FIG. 16] FIG. 16 is an explanatory diagram illustrating a side sill structure and test conditions of examples and comparative examples in a collision test of examples.
[FIG. 17-1] FIG. 17-1 is a graph illustrating a relationship between an intrusion amount of collision object (punch), a punch reaction force, and absorbed energy in the collision test of an example (example).
[FIG. 17-2] FIG. 17-2 is a graph illustrating a relationship between an intrusion amount of collision object (punch), a punch reaction force, and absorbed energy in the collision test of an example (comparative example).
[FIG. 18] FIG. 18 is a graph illustrating absorbed energy at the time of maximum intrusion of collision object (punch) in the collision test of examples (examples and comparative examples).

### Description of Embodiments

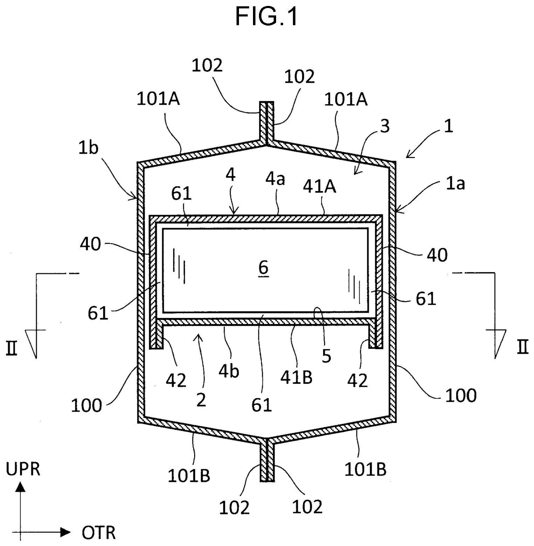

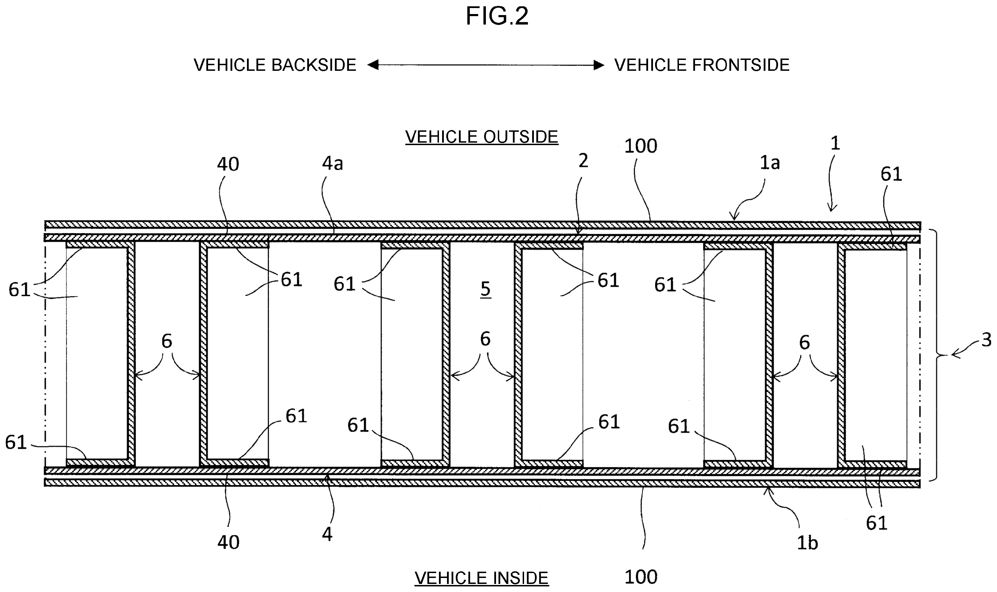

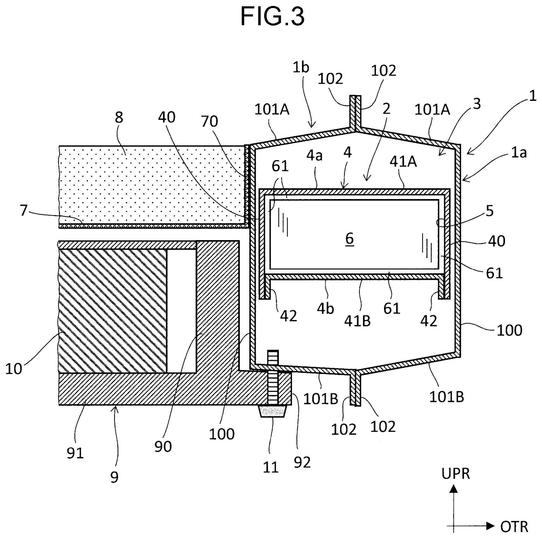

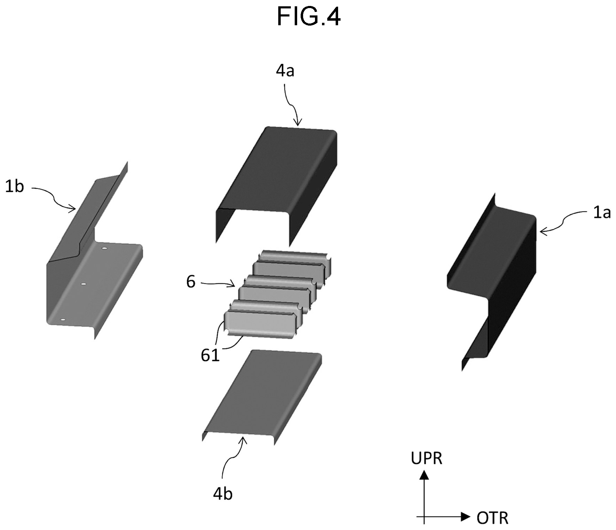

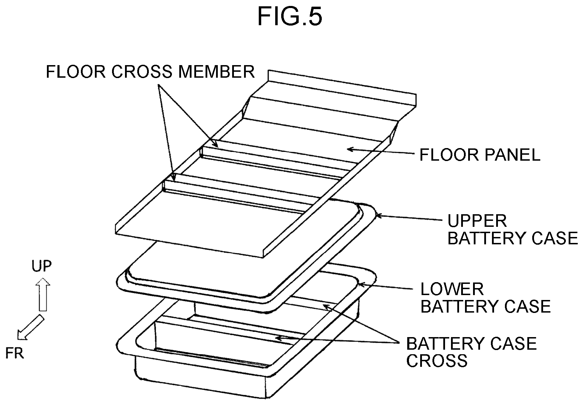

FIGS. 1 to 3 schematically illustrate an embodiment of an automotive side sill structure according to the present invention. FIG. 1 is a longitudinal sectional view of a side sill structure in a vehicle width direction. FIG. 2 is a cross-sectional view taken along line II-II in FIG. 1. FIG. 3 is a longitudinal sectional view of a vehicle body side structure including a side sill in the vehicle width direction. FIG. 4 is a component development view of the embodiment of an automotive side sill structure according to the present invention, and FIG. 5 is an explanatory diagram illustrating, in a developed manner, a floor panel, a floor cross member, and a battery case arranged between both side sills. Hereinafter, the automotive side sill structure according to the present invention will be described using the embodiment illustrated in FIGS. 1 to 3 as an example.

### <Basic structure of side sill and peripheral part>

A side sill 1 is configured by joining a side sill outer 1a having a groove-shaped cross section and a side sill inner 1b, and a closed sectional space 3 is formed in the side sill 1. Details of the side sill structure will be described later. A vehicle body lower structure of an automobile including the side sill will be described with reference to FIG. 3. The side sill 1 is a frame structure member arranged on both sides of a vehicle body lower portion. A floor panel 7 is disposed between both side sills 1, and the floor panel 7 is joined to the both side sills 1 (an upper part of a longitudinal surface portion 100 of the side sill inner 1b in FIG. 3) via the both flanges 70. Further, a floor cross member 8 that is a frame structure member in the vehicle width direction is disposed on the floor panel 7, and both ends of the floor cross member 8 are joined to the both side sills 1 (the upper part of the longitudinal surface portion 100 of the side sill inner 1b in FIG. 3) via the floor panel 7 (flange 70). The floor cross member 8 is provided in a plurality of locations at predetermined intervals (e.g., about 300 mm) in a vehicle front-rear direction. The floor panel 7 and the floor cross member 8 described above are usually joined to the side sill 1 by spot welding.

A battery case 9 housing a battery pack 10 is disposed below the floor panel 7. A side part of the battery case 9 (battery case side member 90) faces a lower part of the side sill 1 (a lower part of the longitudinal surface portion 100 of the side sill inner 1b) at a predetermined interval. A mounting flange 92 is connected to a bottom part of the battery case 9 (battery case bottom plate 91) so as to protrude toward the side sill side. The battery case 9 is held by the side sill 1 by fastening the mounting flange 92 and a lower end of the side sill 1 (lateral surface portion 101B on a lower side of the side sill inner 1b) with a fixing bolt 11. With this structure, a load input to the side sill 1 at the time of side collision is input to both the floor cross member 8 and the battery case 9, and thus the load can be handled in a wide range. In addition, the load at the time of side collision is input to the floor cross member 8 before the battery case 9, and the load input to the battery case 9 is reduced.

The side sill outer 1a and the side sill inner 1b configuring the side sill 1 are formed by forming a metal plate. Each of these members 1a and 1b includes a main body having a groove-shaped cross section including a longitudinal surface portion 100 and lateral surface portions 101A and 101B connected to upper and lower ends of the longitudinal surface portion 100, and flanges 102 connected to both ends (ends of the lateral surface portions 101A and 101B). The longitudinal surface portion 100 may not be perpendicular and may have an appropriate inclination or a curved surface. In addition, the lateral surface portions 101A and 101B do not have to be horizontal, and may have an appropriate inclination or curved surface. The side sill outer 1a and the side sill inner 1b configure the side sill 1 that forms the closed sectional space 3 therein by overlapping and joining (usually joining by spot welding) the flanges 102.

### <Impact-absorbing structure 2 included in side sill structure>

In the side sill structure as described above, in the present invention, the impact-absorbing structure 2 having a specific structure is provided in the closed sectional space 3 in the side sill 1. Specifically, "the impact-absorbing structure 2 configured by structurally integrating a cross-section hollow member 4 provided along the vehicle front-rear direction so as to vertically partition the closed sectional space 3 and a plurality of bulkheads 6 having a specific structure and arrangement provided inside a closed sectional space 5 of the cross-section hollow member 4" is provided in the closed sectional space 3 of the side sill 1. As a result, it is possible to achieve the side sill structure capable of obtaining high collision energy absorption characteristics with a small collision deformation amount. In addition, the impact-absorbing structure 2 is provided without interposing a partition member in the closed sectional space 3 of the side sill 1, and high bending stiffness can be obtained with the minimum required number of components (in particular, the minimum number of bulkheads installed). Therefore, an increase in weight of the vehicle body due to the components of the side sill structure, including the impact-absorbing structure 2, can also be suppressed. The impact-absorbing structure 2 is provided at least in a portion along the battery case side member 90 of the side sill in the vehicle front-rear direction.

The cross-section hollow member 4 is provided along the vehicle front-rear direction (side sill longitudinal direction) in the closed sectional space 3 such that the closed sectional space 5 is formed therein and the closed sectional space 3 of the side sill 1 is vertically partitioned. The cross-section hollow member 4 of the present embodiment includes a cross-section grooved member 4a opened downward, and a plate-shaped lid structure 4b that closes a downward opening (open side) of the cross-section grooved member 4a. The members (cross-section grooved member 4a and lid structure 4b) configuring the cross-section hollow member 4 are formed by bending a metal plate. A flange 42 for joining is connected to both ends of the lid structure 4b in the width direction. In the lid structure 4b, both flanges 42 are fitted into the opening of the cross-section grooved member 4a so as to be in close contact with the inside of the opening (i.e., inside of distal ends of the both flanges of the cross-section grooved member 4a), and the both flanges 42 are joined to the cross-section grooved member 4a. This joining is usually performed by spot welding. The flange 42 may be formed only in a part of the lid structure 4b in the longitudinal direction (e.g., formed intermittently at predetermined intervals).

The cross-section hollow member 4 configured as described above is a member having a substantially horizontally long rectangular cross section in the vehicle width direction and including upper and lower lateral surface portions 41A and 41B and longitudinal surface portions 40 on the vehicle outer side and the vehicle inner side, and the inside of the cross-section hollow member 4 forms the closed sectional space 5. In other words, in the member having the substantially horizontally long rectangular cross section, the lateral surface portions 41A and 41B at the top and bottom are an upper surface portion and a lower surface portion, respectively, and the both longitudinal surface portions 40 on the vehicle outer side and the vehicle inner side are side surface portions. As described above, since the cross-section hollow member 4 has the substantially horizontally long rectangular cross section in the vehicle width direction, the load at the time of side collision is efficiently transferred to the floor cross member 8 and the battery case 9. The cross-section hollow member 4 is disposed at an intermediate position in a height direction in the closed sectional space 3 so as to vertically partition the closed sectional space 3 of the side sill 1. As illustrated in FIG. 3, the cross-section hollow member 4 is preferably disposed such that a position in the height direction of the longitudinal surface portion 40 of the cross-section hollow member 4 overlaps at least one (preferably both) of the floor cross member 8 and the battery case 9. In this case, it is preferable to adjust an overlap margin in the height direction between the longitudinal surface portion 40 and the floor cross member 8 and the battery case 9 so that a load input to the floor cross member 8 and the battery case 9 is adjusted to have an appropriate balance. In addition, an interval (space) between each of the lateral surface portions 41A and 41B at the top and bottom of the cross-section hollow member 4 and the side sill (lateral surface portions 101A and 101B at the top and bottom of the side sill outer 1a and the side sill inner 1b, respectively) is preferably adjusted from the same viewpoint.

In the present embodiment, the both longitudinal surface portions 40 of the cross-section hollow member 4 and the both longitudinal surface portions 100 of the side sill 1 facing the longitudinal surface portions 40 face each other with a predetermined interval. Thus, the side sill 1 supports the cross-section hollow member 4 by a separate support structure (not illustrated). This structure will be described in detail later. The cross-section hollow member 4 configures a pressure receiving surface portion in which the longitudinal surface portion 40 on the vehicle outer side receives a side collision load, and an energy absorbing surface portion in which the upper and lower lateral surface portions 41A and 41B are deformed by the side collision load to absorb collision energy. Since the cross-section hollow member 4 is provided without interposing the partition member, it is not necessary to provide upper and lower flanges for joining with the partition member. Therefore, it is not necessary to form a gap (space) corresponding to the flange above and below the cross-section hollow member 4, and it is possible to obtain advantages such as increasing the dimension of the impact-absorbing structure 2 in the vehicle vertical direction and reducing a vertical positional restriction inside the side sill 1.

The bulkhead 6 is a member that partitions the closed sectional space 5 by being provided along the vehicle width direction in the closed sectional space 5 of the cross-section hollow member 4, and is provided in a plurality of locations spaced apart in the vehicle front-rear direction in the closed sectional space 5. The bulkhead 6 is preferably provided so as to partition the entire cross section of the closed sectional space 5 in the vehicle width direction. The bulkhead 6 suppresses a cross section collapse of the cross-section hollow member 4, and also buckles itself to cause a bending collapse to absorb collision energy. In the impact-absorbing structure 2 of the present invention, since the bulkheads 6 provided in the closed sectional space 5 along the vehicle width direction are an integrated single component in the vehicle width direction, a load transfer in the vehicle width direction is reliably performed, and desired collision energy absorption characteristics are obtained. Still more, since the bulkheads 6 are integrated in the vehicle width direction to form a single component, there is an advantage that the impact-absorbing structure 2 is easily assembled and the assembly man-hours are reduced.

Each of the bulkheads 6 is formed by a metal plate, and its outer peripheral edge is joined to an inner wall of the cross-section hollow member 4 (peripheral wall of the closed sectional space 5). Each bulkhead 6 is preferably joined to at least an inner wall of the longitudinal surface portion 40 on the vehicle inner side that is greatly deformed by the side collision load, and at least an inner wall of one of the lateral surface portion 41A and the lower lateral surface portion 41B at the top and bottom among inner walls of the cross-section hollow member 4 forming the closed sectional space 5. Still more, in this case, it is more preferable that the bulkhead 6 is joined to the inner wall of both lateral surface portion 41A and the lower lateral surface portion 41B at the top and bottom. Further, the bulkhead 6 may be joined to an inner wall of the longitudinal surface portion 40 on the vehicle outer side, so as to be joined to all of four inner walls of the cross-section hollow member 4. In the present embodiment, the bulkhead 6 has a flange 61 on an outer peripheral edge of its main body (partition wall) (see FIG. 4), and is joined to the inner wall of the cross-section hollow member 4 via the flange 61. This joining is usually performed by spot welding. The flange 61 may be formed only on a part of the outer peripheral edge joined to the inner wall of the cross-section hollow member 4 of the main body (partition wall). The bulkheads 6 may be provided at equal intervals in the vehicle front-rear direction in the closed sectional space 5. However, for example, as illustrated in FIG. 2, a wide interval and a narrow interval may be alternately provided. Furthermore, as described later, the bulkheads 6 may be provided at different intervals for each area in the vehicle front-rear direction.

As described above, the impact-absorbing structure 2 includes, in the closed sectional space 3 of the side sill 1, the cross-section hollow member 4 provided along the vehicle front-rear direction so as to vertically partition the closed sectional space 3 and the plurality of bulkheads 6 having a specific structure and arrangement provided in the closed sectional space 5 of the cross-section hollow member 4, and has a structure in which the cross-section hollow member 4 and the bulkheads 6 are structurally integrated. In other words, the cross-section hollow member 4 encloses the bulkheads 6 having the specific structure and arranged at intervals in the vehicle front-rear direction, and these components are integrated. As a result, high impact energy absorption characteristics as described later are obtained.

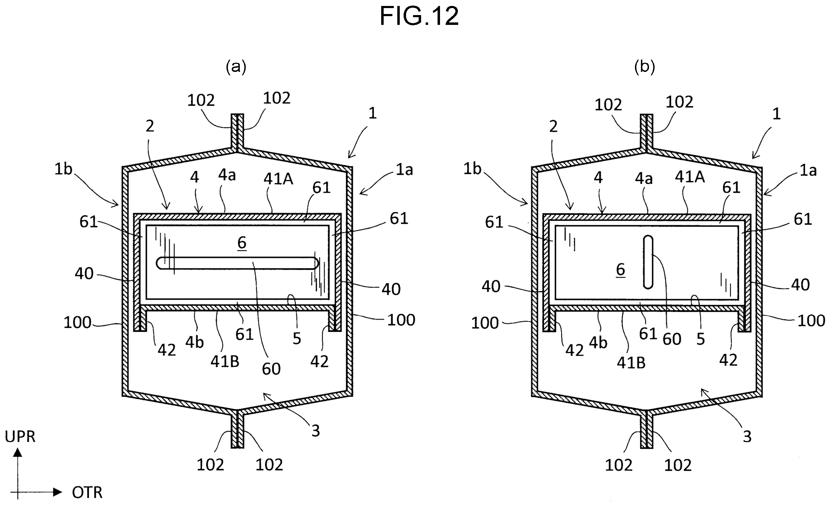

A yield strength of the metal plate forming the impact-absorbing structure 2 (cross-section hollow member 4 and bulkheads 6) is preferably equal to or less than a yield strength of the metal plate forming the floor cross member 8. This is because the impact-absorbing structure 2 is reliably deformed prior to the floor cross member 8 at the time of side collision to absorb collision energy and suppress deformation of the floor cross member 8. For this reason, when the yield strength of the metal plate of the impact-absorbing structure 2 is equal to the yield strength of the metal plate of the floor cross member 8, it is preferable to provide a crash bead in a part of the impact-absorbing structure 2 or the like to make a buckling strength (= load that causes the member itself to start buckling deformation, hereinafter the same) lower than a buckling strength of the floor cross member 8. Specifically, a bead 60 (crash bead) or the like as illustrated in FIG. 12(b) described later is preferably applied to the bulkheads 6 and/or the lateral surface portions 41 (41A and 41B) of the cross-section hollow member 4 configuring the impact-absorbing structure 2.

In addition, the metal plate used for the impact-absorbing structure 2 (cross-section hollow member 4 and bulkheads 6) preferably has a tensile strength of 590 MPa grade or higher. As for the collision characteristics of the impact-absorbing structure 2, deformation at collision is less likely to occur as a load (hereinafter referred to as "strength") is higher at the time of turning to plastic deformation through elastic deformation immediately after deformation of the impact-absorbing structure 2 begins at side collision, and the collision characteristics will be better. The strength increases as a tensile strength of the metal plate used for the impact-absorbing structure 2 increases, and thus it is preferable to use the metal plate of 590 MPa grade or higher that has higher tensile strength than ordinary steel. In addition, when a high-tensile steel sheet is used as a metal plate (material) for the impact-absorbing structure 2, the impact-absorbing structure 2 disposed inside the side sill 1 also functions as a reinforcement of the side sill. Therefore, the metal plate used for the impact-absorbing structure 2 is particularly preferably a high-tensile steel sheet of 1180 MPa grade or higher.

### <Function and effect of impact-absorbing structure 2>

The impact-absorbing structure 2 included in the automotive side sill structure according to the present invention has an integrated structure of the cross-section hollow member 4 provided in the closed sectional space 3 of the side sill 1 under the predetermined condition and the plurality of bulkheads 6 provided in the closed sectional space 5 of the cross-section hollow member 4 under the predetermined condition. In other words, the cross-section hollow member 4 encloses the bulkheads 6 arranged at intervals in the vehicle front-rear direction, and these components are integrated. Due to this structure, the entire impact-absorbing structure 2 has high bending stiffness (bending deformation resistance against side collision load). Therefore, local deformation around a location where the side collision load is input is suppressed, and collision energy absorption (EA) can be enhanced by deforming the entire impact-absorbing structure 2 at the time of side collision.

At the time of side collision, the longitudinal surface portion 40 (pressure receiving surface portion) on the vehicle outer side configuring the cross-section hollow member 4 receives the collision load via the side sill outer 1a, and the lateral surface portions 41A and 41B (energy absorbing surface portions) at the top and bottom undergo bending collapse to absorb the collision energy. At this time, the bulkheads 6 integrated with the cross-section hollow member 4 suppress the cross section collapse of the cross-section hollow member 4, and the bulkheads 6 also undergo buckling (axial crush) to absorb collision energy. In this case, since the bulkheads 6 provided along the closed sectional space 5 in the vehicle width direction are the integrated single component in the vehicle width direction, a load transfer in the vehicle width direction is reliably performed, and the impact-absorbing structure 2 undergoes crushing by receiving reaction force from the floor cross member 8 and the battery case 9. As a result, the desired collision energy absorption characteristics are appropriately obtained.

<Another embodiment of impact-absorbing structure 2>

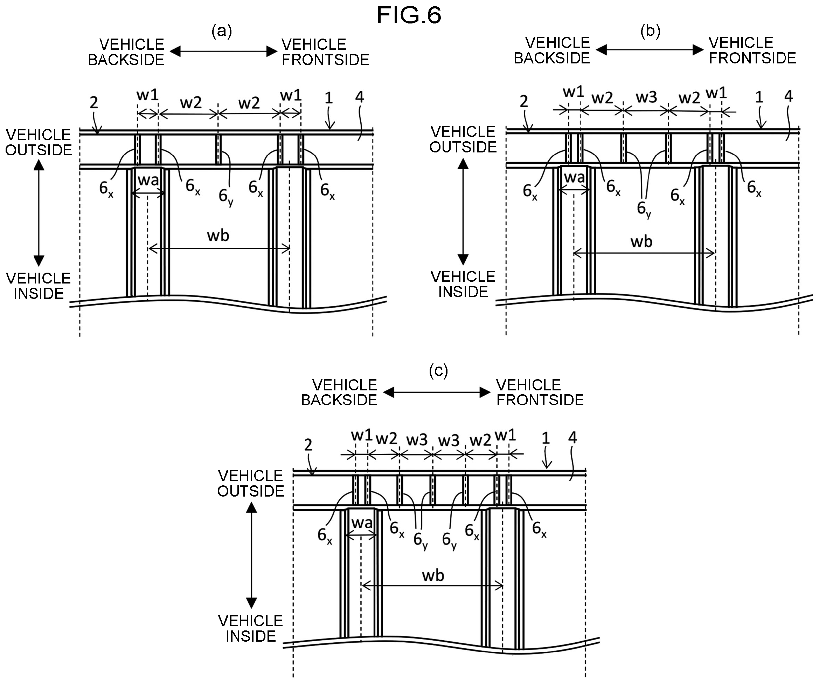

FIG. 6 illustrates another arrangement examples of the bulkheads 6 in the vehicle front-rear direction, and the bulkheads 6 are provided at different intervals for each area in the vehicle front-rear direction. The bulkheads 6 in these arrangements include a bulkhead 6ₓ provided in an area within a width wa of the floor cross member 8 in the vehicle front-rear direction and a bulkhead 6_{y} provided in other areas (areas outside the width of the floor cross member 8). In the vehicle front-rear direction, the bulkhead 6ₓ is provided in two or more locations (two locations in the embodiment in FIG. 6) in the area within the width wa of the floor cross member 8, and the bulkhead 6_{y} is provided in one or more locations in the area outside the width of the floor cross member 8. Furthermore, when two adjacent bulkheads 6ₓ are provided at an interval w1, and the bulkhead 6ₓ and the bulkhead 6_{y} adjacent thereto is provided at an interval w2, w1 < w2 is satisfied. The bulkheads 6 are arranged in this way for the following reason. In other words, in the area within the width wa of the floor cross member 8, the bulkhead 6ₓ is provided in two or more locations to reduce the interval between the bulkheads 6ₓ, thereby enhancing the collision characteristics. On the other hand, by increasing the interval between the bulkhead 6_{y} and the bulkhead 6ₓ in other areas, the number of bulkheads 6 to be provided is suppressed, thereby reducing the weight. When the bulkhead 6_{y} is provided in two or more locations in the area outside the width of the floor cross member 8, an interval w3 between two adjacent bulkheads 6_{y} is preferably set to satisfy w1 < w3.

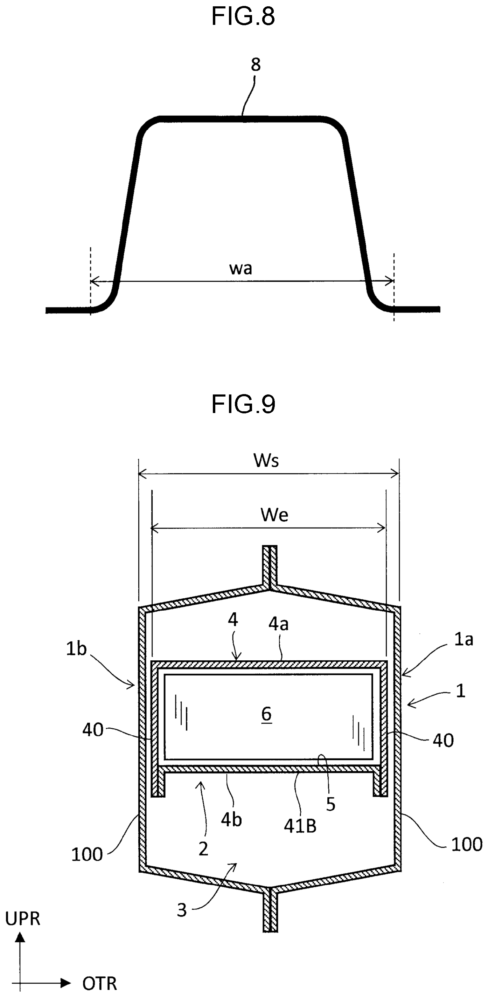

The width wa of the floor cross member 8 may be a width between both side walls in the width direction of the floor cross member. FIG. 8 schematically illustrates a cross section in the width direction of a general floor cross member 8 having a flange at both edges. In this case, the width wa of the floor cross member 8 may be a width excluding the flanges at both edges in the width direction of the floor cross member (width of a main portion functioning as a frame member), i.e., a width between portions where R of the flanges starts. In a case where the bulkheads 6ₓ are arranged in a plurality of locations within the width wa of the floor cross member 8, an effect of enhancing the collision characteristics within the width wa of the floor cross member 8 is deteriorated when the interval w1 between two adjacent bulkheads 6ₓ is too small. In addition, it may also lead to unnecessarily increasing the number of bulkheads 6ₓ provided. Therefore, the bulkhead 6ₓ is preferably arranged such that a ratio w1/wa of the interval w1 to the width wa of the floor cross member 8 is 0.4 or more and 1.0 or less.

On the other hand, the interval w2 between the bulkhead 6ₓ and the bulkhead 6_{y} adjacent to each other and the interval w3 between the bulkheads 6_{y} are preferably 254 mm or less in order to secure bending stiffness of the impact-absorbing structure 2 at the time of side collision. This 254 mm is a diameter of a collision object (pole) used in a side impact test (side pole crash test as defined in Euro NCAP). By setting the intervals w2 and w3 to be equal to or less than the diameter of the collision object (pole) in this test, it is possible to more appropriately secure the bending stiffness of the impact-absorbing structure 2 at the time of side collision. From the same viewpoint, the interval w2 between the bulkhead 6ₓ and the bulkhead 6_{y} adjacent to each other and the interval w3 between the bulkheads 6_{y} are preferably about 1/4 to 1/2 of an installation interval of the floor cross members 8 (interval wb between the floor cross members 8 adjacent to each other).

An arrangement in FIG. 6(a) is an example in which the bulkhead 6_{y} is provided in one location in an area outside the width of the floor cross member 8 between the adjacent floor cross members 8, and the bulkheads 6ₓ and 6_{y} are provided under a condition satisfying w1 < w2. In addition, arrangements in FIGS. 6(b) and 6(c) are examples in which the bulkheads 6_{y} are provided in two to three locations in the area outside the width of the floor cross member 8 between the adjacent floor cross members 8, and the bulkheads 6ₓ and 6_{y} are provided under conditions satisfying w1 < w2 and w1 < w3.

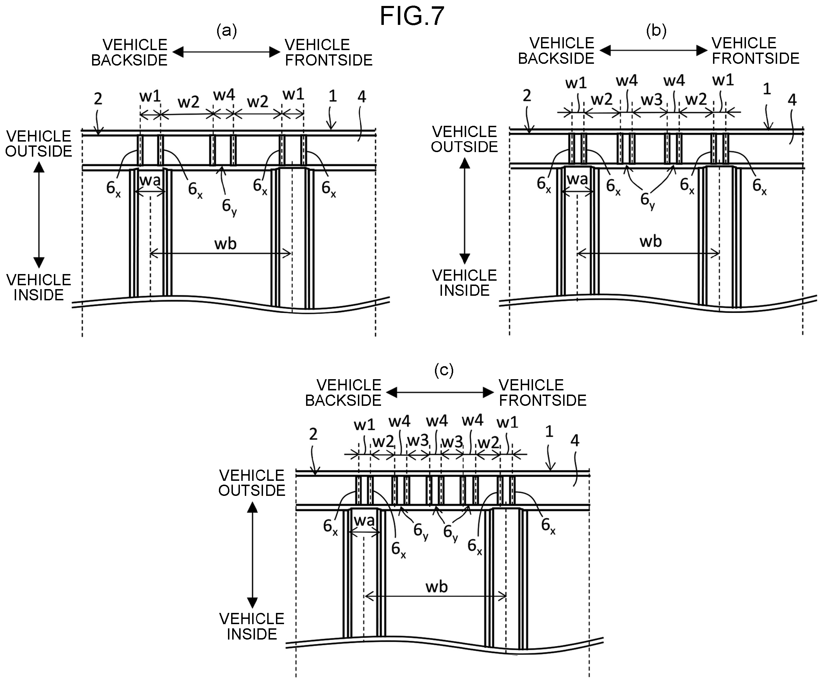

FIG. 7 illustrates another arrangement example of the bulkheads 6 in the vehicle front-rear direction. In this arrangement, similarly to the embodiment in FIG. 6, the bulkheads 6 are provided at different intervals for each area in the vehicle front-rear direction, but the bulkhead 6_{y} is provided differently in order to further increase the bending stiffness of the impact-absorbing structure 2 between the floor cross members 8. In other words, the bulkhead 6_{y} provided in the area outside the width of the floor cross member 8 is configured with a bulkhead set including two or more bulkheads (two bulkheads in the embodiment in FIG. 7) provided adjacent to each other. Therefore, each bulkhead 6_{y} of the embodiment in FIG. 7 is configured with the bulkhead set including two bulkheads as one set. Although the size of an interval w4 between the bulkheads included in the bulkhead set is arbitrary, the interval w4 is basically determined from substantially the same viewpoint as the interval w1, and thus, the condition may be the same as the interval w1 described above. The bulkhead 6_{y} configured with the bulkhead set including two or more bulkheads in this manner may be used in all bulkheads 6_{y} or in only some of the bulkheads 6_{y}.

The arrangement in FIG. 7(a) is an example in which the bulkhead 6_{y} (bulkhead set including two bulkheads as one set) is provided in one location in an area between the adjacent floor cross members 8 outside the width of the floor cross member 8. The bulkheads 6ₓ and 6_{y} are provided under a condition satisfying w1 < w2. In addition, the arrangements in FIGS. 7(b) and 7(c) are examples in which the bulkhead 6_{y} (bulkhead set including two bulkheads as one set) is provided in two to three locations in an area between the floor cross members 8 adjacent to each other outside the width of the floor cross member 8. The bulkheads 6ₓ and 6_{y} are provided under conditions satisfying w1 < w2 and w1 < w3.

In the automotive side sill structure according to the present invention, the impact-absorbing structure 2 (cross-section hollow member 4) may have an appropriate interval (space) with the side sill outer 1a and the side sill inner 1b (their longitudinal surface portions 100) as illustrated in FIG. 1 (Mode 1). On the other hand, the impact-absorbing structure 2 (cross-section hollow member 4) may abut on or be joined to the inner side surfaces of the side sill outer 1a and the side sill inner 1b (their longitudinal surface portions 100) mainly to prevent vibration (Mode 2). In the case of Mode 1, when a distance between the impact-absorbing structure 2 (cross-section hollow member 4) and the side sill outer 1a and the side sill inner 1b is too narrow, both members come into contact with each other due to vibration during traveling, and noise and further vibration may become a problem. Therefore, it is preferable that both members face each other with a gap therebetween so as not to come into contact with each other due to vibration during traveling. On the other hand, since the shock absorbing performance is improved by transferring the side collision load to the floor cross member from an initial stage of collision, the shock absorbing performance becomes higher, from the structural perspective, as the width of the impact-absorbing structure 2 is close to the entire width of the side sill. Therefore, a width We of the impact-absorbing structure 2 (cross-section hollow member 4) in the vehicle width direction is preferably 60% or more of a width Ws (interval between longitudinal surface portions 100 of the side sill outer 1a and the side sill inner 1b) of the side sill 1. FIG. 9 illustrates the width We of the impact-absorbing structure 2 and the width Ws of the side sill 1. When the width We of the impact-absorbing structure 2 or the width Ws of the side sill 1 varies depending on a position in the vehicle height direction, widths at the height position where the width is the widest are defined as Ws and We.

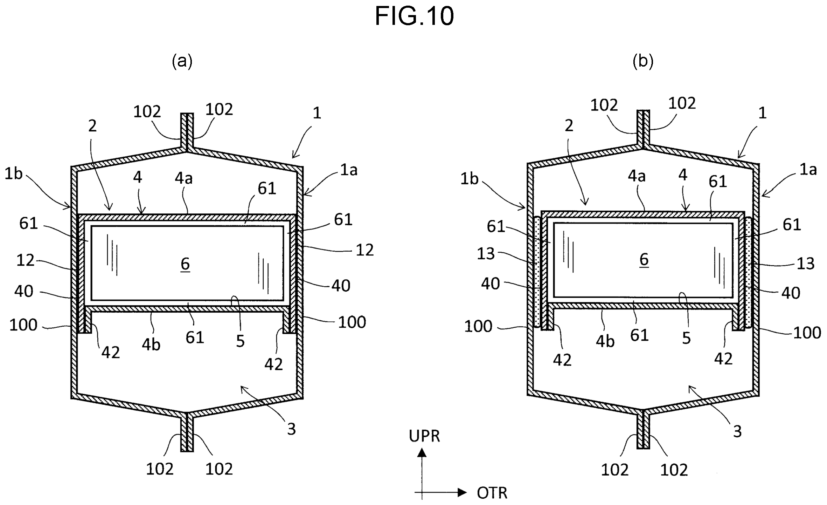

Also in the case of Mode 2, various embodiments can be adopted. FIG. 10 schematically illustrates the embodiment, and is a longitudinal sectional view of the side sill in the vehicle width direction. FIG. 10(a) illustrates an example in which the longitudinal surface portions 40 of the cross-section hollow member 4 are joined (joint portion 12 in the drawing) to inner side surfaces of the longitudinal surface portions 100 of the side sill outer 1a and the side sill inner 1b by welding (usually, spot welding). In a mode illustrated in FIG. 10(a), the longitudinal surface portions 40 may simply abut on the longitudinal surface portions 100 instead of being joined. FIG. 10(b) illustrates an example in which the longitudinal surface portions 40 of the cross-section hollow member 4 are joined to the inner side surfaces of the longitudinal surface portions 100 of the side sill outer 1a and the side sill inner 1b by an adhesive 13 (adhesive layer). In the case of bonding by the adhesive 13 in this manner, the adhesive may be applied only to a part of a bonding surface. The adhesive 13 (adhesive layer) may function as a vibration-proof member that attenuates vibration.

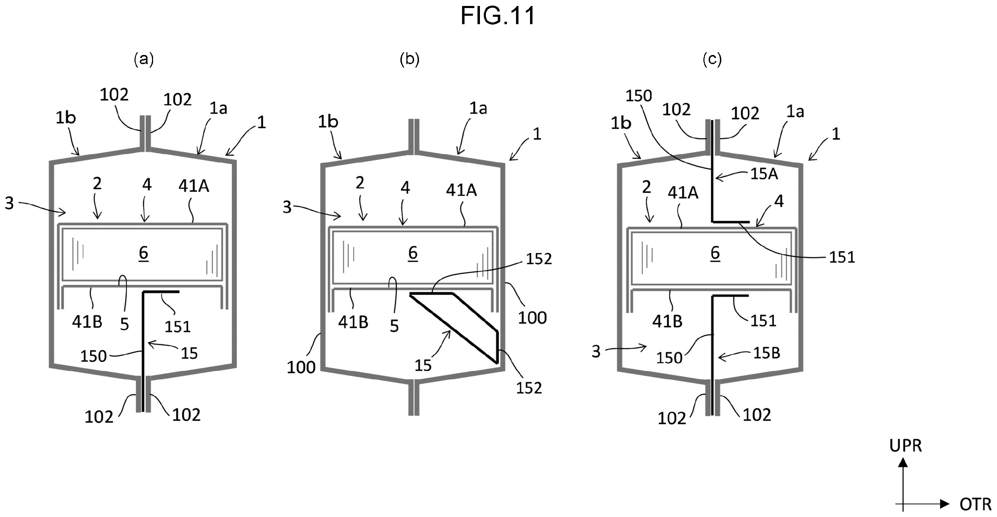

As illustrated in FIG. 1, when the impact-absorbing structure 2 (cross-section hollow member 4) is not joined to the side sill outer 1a and the side sill inner 1b (their longitudinal surface portions 100), the impact-absorbing structure 2 is supported by the side sill 1 by a separately provided support structure. FIGS. 11(a) to 11(c) are explanatory diagrams illustrating examples of the support structure of the impact-absorbing structure 2 (cross-section hollow member 4) by a support structure 15. FIG. 11(a) illustrates an example of using the support structure 15 made of an L-shaped angle member (cross-sectional hollow member). The L-shaped angle member configuring the support structure 15 is joined to the side sill 1 with a widthwise end of a wide side portion 150 sandwiched between the flanges 102 on lower sides of the side sill outer 1a and the side sill inner 1b. Then, a narrow side portion 151 of the L-shaped angle member abuts on and is joined to the lateral surface portion 41B on a lower side of the cross-section hollow member 4, whereby the impact-absorbing structure 2 (cross-section hollow member 4) is supported by the side sill 1 via the support structure 15. FIG. 11(b) illustrates an example of using the support structure 15 configured with a cross-section grooved member. The cross-section grooved member configuring the support structure 15 is joined such that one inclined surface portion 152 abuts on the lower inner surface of the side sill outer 1a. The other inclined surface portion 152 of the cross-section grooved member abuts on and is joined to the lateral surface portion 41B on the lower side of the cross-section hollow member 4, whereby the impact-absorbing structure 2 (cross-section hollow member 4) is supported by the side sill 1 via the support structure 15.

FIG. 11(c) illustrates an example in which the impact-absorbing structure 2 (cross-section hollow member 4) is supported so as to be sandwiched between the two support structures 15A and 15B from above and below by using the support structure 15 made of the same L-shaped angle member as in FIG. 11(a). The L-shaped angle member configuring the support structure 15A on the upper side is joined to the side sill 1 with the widthwise end of the wide side portion 150 sandwiched between the flanges 102 on the upper side of the side sill outer 1a and the side sill inner 1b. Then, the narrow side portion 151 of the L-shaped angle member abuts on and is joined to the lateral surface portion 41A on the upper side of the cross-section hollow member 4. Further, the L-shaped angle member configuring the support structure 15B on the lower side is joined to the side sill 1 with the widthwise end of the wide side portion 150 sandwiched between the flanges 102 on the lower side of the side sill outer 1a and the side sill inner 1b. Then, the narrow side portion 151 of the L-shaped angle member abuts on and is joined to the lateral surface portion 41A on the lower side of the cross-section hollow member 4. As a result, the impact-absorbing structure 2 (cross-section hollow member 4) is supported by the side sill 1 via the two support structures 15A and 15B at the top and bottom. The support structure 15 of each embodiment in FIG. 11 described above is formed by bending a metal plate.

Further, as another example of the support structure of the impact-absorbing structure 2, the impact-absorbing structure 2 (cross-section hollow member 4) may be supported only by the support structure 15A on the upper side in FIG. 11(c). At least one of welding (usually, spot welding), mechanical fastening using a bolt, a rivet, or the like, adhesion, or the like is used as a method of joining the support structure 15, the impact-absorbing structure 2 (cross-section hollow member 4), and the side sill 1. The support structure 15 may be provided along the vehicle front-rear direction so as to support the impact-absorbing structure 2 over the entire length, or may be intermittently provided along the vehicle front-rear direction so as to support the impact-absorbing structure 2 at intervals in the longitudinal direction. Even when the impact-absorbing structure 2 (cross-section hollow member 4) is joined to the side sill outer 1a and the side sill inner 1b (their longitudinal surface portions 100) as illustrated in FIG. 10, a support structure by the support structure 15 illustrated in FIG. 11 may also be used for reinforcement and the like.

In addition, the lateral surface portions 41 (41A and 41B) of the bulkhead 6 and/or the cross-section hollow member 4 may be provided with beads in the main body (partition wall for the bulkhead) in order to increase the buckling strength (stiffness) or to decrease the buckling strength (stiffness). FIG. 12 schematically illustrates an embodiment in which the bead is provided in the bulkhead 6, and is a longitudinal sectional view of the side sill in the vehicle width direction. In FIG. 12(a), the bead 60 in the vehicle width direction is provided in the main body (partition wall) of the bulkhead 6 in order to increase the buckling strength. On the other hand, in FIG. 12(b), the bead 60 (crush bead) in the vertical direction is provided in the main body (partition wall) of the bulkhead 6 in order to decrease the buckling strength. The reason for providing the bead 60 as illustrated in FIG. 12(b) is as described above. For the same purpose as described above, beads according to FIGS. 12(a) and 12(b) can also be provided on the lateral surface portion 41 (lateral surface portion 41A and/or lateral surface portion 41B) of the cross-section hollow member 4.

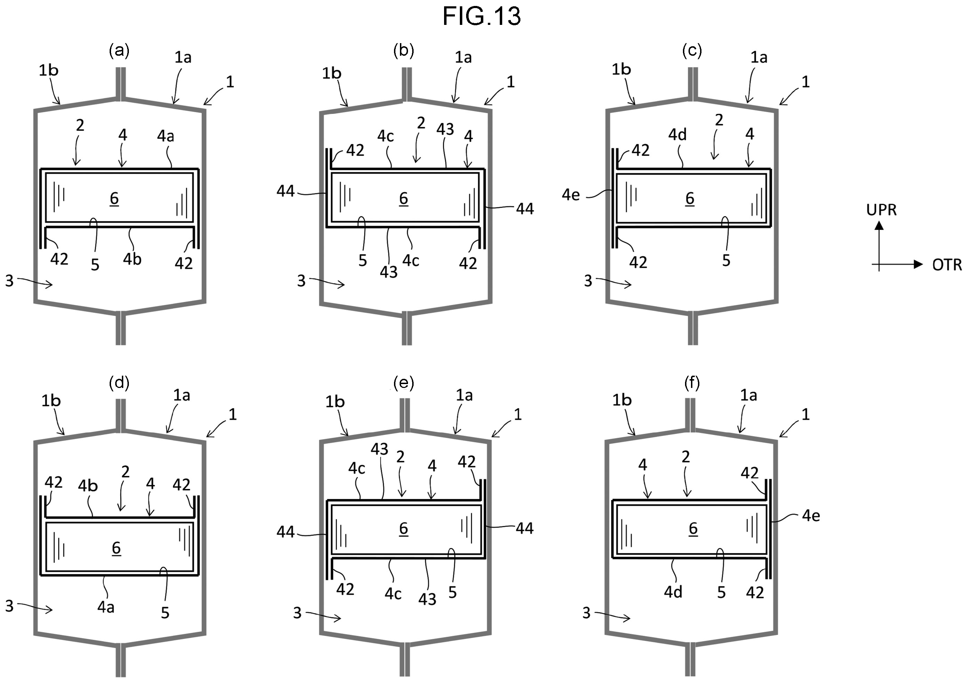

The structure of the cross-section hollow member 4 configuring the impact-absorbing structure 2 is not limited to the embodiment illustrated in FIGS. 1 to 3. For example various embodiments as illustrated in FIG. 13 may be adopted. FIGS. 13(a) to 13(f) are explanatory diagrams illustrating structural examples of the cross-section hollow member 4 configuring the impact-absorbing structure 2. FIG. 13(a) illustrates the cross-section hollow member 4 of the embodiment in FIGS. 1 to 3. In FIGS. 13(b) and 13(e), two cross-sectional hollow members 4c (L-shaped angle members) are combined to form the cross-section hollow member 4 having the substantially horizontally long rectangular cross section in the vehicle width direction. The flange 42 for joining is connected to an end portion of a wide side portion 43 of each of the cross-sectional hollow members 4c, and this flange 42 abuts on and is joined to an inner side surface on an end portion side of a narrow side portion 44 of the cross-sectional hollow member 4c on the other side. In FIG. 13(c), the cross-section hollow member 4 having the substantially horizontally long rectangular cross section in the vehicle width direction includes a cross-section grooved member 4d opened sideways in the vehicle inner direction and a plate-shaped lid structure 4e that closes the sideway opening (open side) of this cross-section grooved member 4d. Flanges 42 for joining are connected outward to distal ends of both flanges configuring the opening (open side) of the cross-section grooved member 4d, and the flanges 42 abut on and are joined to surface portions on both end sides in the width direction of the lid structure 4e.

In FIG. 13(d), the cross-section hollow member 4 having the substantially horizontally long rectangular cross section in the vehicle width direction includes the cross-section grooved member 4a opened upward and the plate-shaped lid structure 4b closing the upward opening (open side) of this cross-section grooved member 4a. The flange 42 for joining is connected to both ends of the lid structure 4b in the width direction. In the lid structure 4b, both flanges 42 are fitted into the opening of the cross-section grooved member 4a so as to be in close contact with the inside of the opening (i.e., inside of the distal ends of the both flanges of the cross-section grooved member 4a), and the both flanges 42 are joined to the cross-section grooved member 4a. In FIG. 13(f), the cross-section hollow member 4 having the substantially horizontally long rectangular cross section in the vehicle width direction includes the cross-section grooved member 4d opened sideways in the vehicle outer direction and the plate-shaped lid structure 4e closing the sideway opening (open side) of the cross-section grooved member 4d. As in FIG. 13(c), the flanges 42 for joining are connected outward to the distal ends of both flanges configuring the opening (open side) of the cross-section grooved member 4d, and the flanges 42 are abutted on and joined to the surface portions on both end sides in the width direction of the lid structure 4e. In each embodiment in FIG. 13 described above, each member configuring the cross-section hollow member 4 is formed by bending a metal plate. In addition, the members configuring the cross-section hollow member 4 are usually joined by spot welding. In addition, the flange 42 may be formed only in a part in the longitudinal direction of each member having the flange (e.g., intermittently formed at predetermined intervals).

### <Collision deformation mode of side sill structure at side collision>

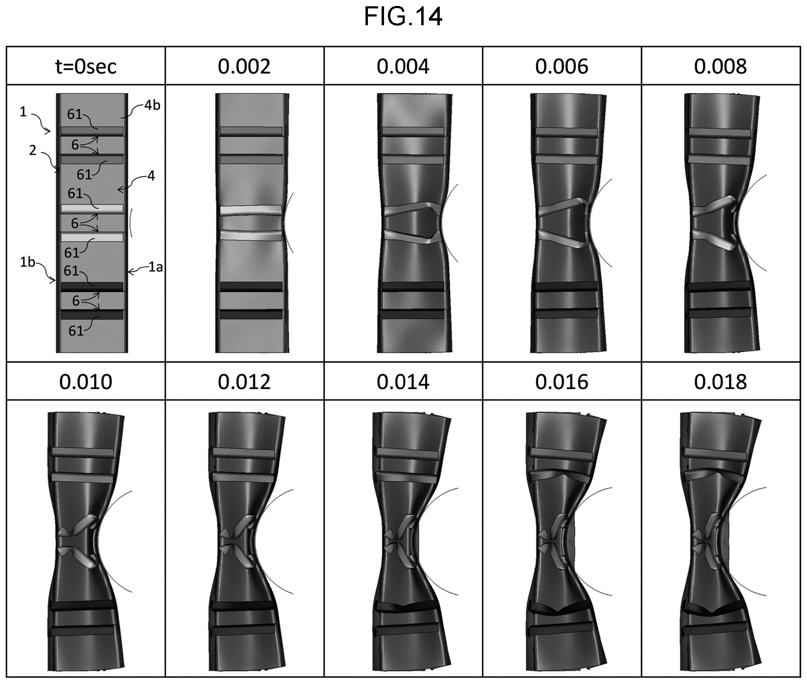

With reference to FIG. 14, a collision deformation mode, at the time of side collision, of the automotive side sill structure according to the present invention will be described. FIG. 14 illustrates a state of deformation at the time of side pole crash in a stepwise manner in a horizontal cross section (cross section taken along line II-II in FIG. 1) of the automotive side sill structure according to the present invention, and time t (seconds) indicates time from the start of collision. Firstly, a mode of cross section deformation of the side sill 1 itself will be described. First, the lateral surface portions 101A and 101B (energy absorbing portions) at the top and bottom of the side sill outer 1a undergo bending collapse and crush so as to spread outward to absorb collision energy (from 0.002 s). In a process of crushing the side sill outer 1a, up to 0.014 s, the bending deformation of the lateral surface portions 101A and 101B (energy absorbing portions) of the side sill outer 1a continues so as to absorb the collision energy until the side sill outer 1a is completely crushed. As the side sill outer 1a undergoes crushing and deformation as described above, the collision load is transferred to the side sill inner 1b via the flange 102 of the side sill 1. Then, after 0.004 s, the flange sides of the lateral surface portions 101A and 101B (energy absorbing portions) of the side sill inner 1b undergo bending collapse in a convex shape to the inside of the closed cross-section of the side sill 1.

With this cross section deformation of the side sill 1 itself, the impact-absorbing structure 2 undergoes cross section deformation as follows. The crushed side sill outer 1a and the longitudinal surface portion 40 on the vehicle outer side of the cross-section hollow member 4 come into contact with each other, and the collision load is transferred to the impact-absorbing structure 2. Crushing (axial crush) in which the lateral surface portions 41A and 41B (energy absorbing surface portions) at the top and bottom of the cross-section hollow member 4 and the bulkheads 6 are bent and deformed in a bellows-shaped manner starts (from 0.002 s). The entire impact-absorbing structure 2 extending in the vehicle front-rear direction is integrally pressed against the floor cross members 8 and the battery case 9 via the side sill inner 1b. Therefore, the collision load transferred to the impact-absorbing structure 2 is transferred to the floor cross members 8 and the battery case 9 in a dispersed manner. The reaction force from the floor cross members 8 and the battery case 9 is also transferred to the impact-absorbing structure 2 (lateral surface portions 41A and 41B and bulkheads 6) at a position adjacent to a side pole crash position in the vehicle front-rear direction (0.004 to 0.006 s). Then, deformation of the impact-absorbing structure 2 at the side pole crash position is promoted, and bending deformation of the lateral surface portions 41A and 41B (energy absorbing surface portions) adjacent in the vehicle front-rear direction is also promoted (0.008 to 0.012 s). Further, the bulkheads 6 adjacent to the side pole crash position are also bent and deformed (from 0.012 s).

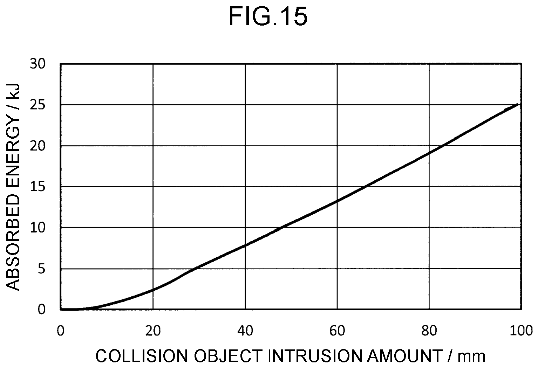

FIG. 15 illustrates a relationship between an intrusion amount of a collision object and the absorbed energy at the time of deformation due to the side pole crash.
Collision object: Rigid pole of R127 mm (corresponding to a diameter of 254 mm)
Collision speed: 30.9 km/h
Collision energy: 25 kJ

This test shows that collision energy of 25 kJ can be absorbed within a collision object intrusion amount of 100 mm by mainly deforming the impact-absorbing structure 2.

In the cross section deformation of the side sill structure at the time of side collision as described above, the impact-absorbing structure 2 installed in the side sill 1 and having an integrated structure of the cross-section hollow member 4 and the bulkheads 6 has high deformation resistance. Therefore, with respect to the input load, the entire impact-absorbing structure 2 is integrally deformed without being locally deformed (e.g., bending and deforming from a collision part). As a result, the collision energy is effectively and appropriately absorbed. Thus, the automotive side sill structure according to the present invention functions as follows in a vehicle (particularly, an electric vehicle) including a battery module below the floor panel 7 between both side sills 1 as illustrated in FIG. 3. In other words, by transferring the load to the floor cross member 8 and the battery case 9 while the impact-absorbing structure 2 is crushed by the load input from the vehicle width direction to absorb energy at the time of side collision, it is possible to prevent the load from being transferred to the battery pack 10 and to protect the battery pack 10 from the impact of the collision.

### Example

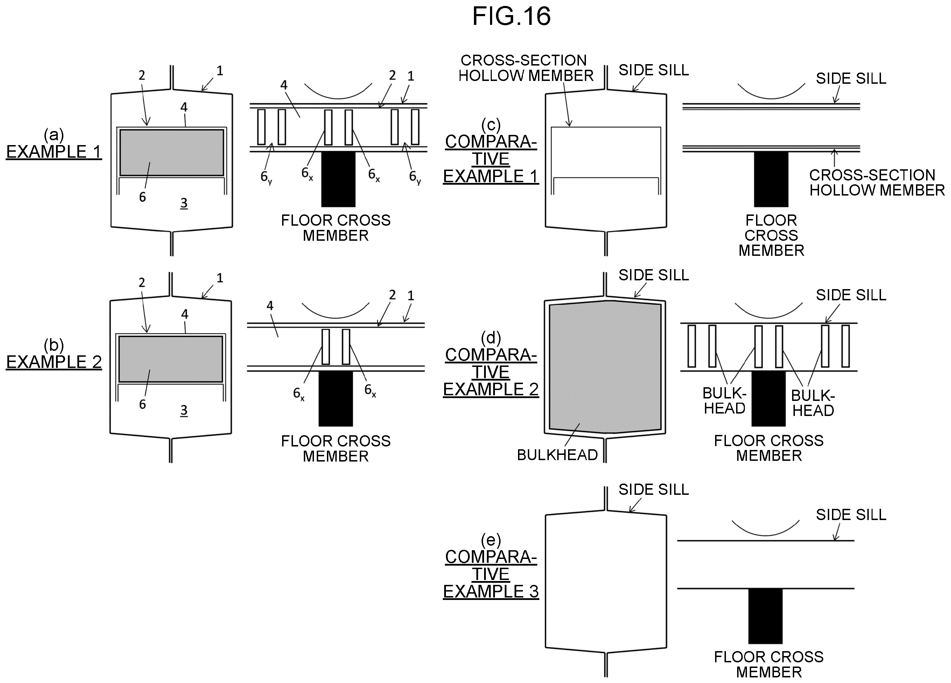

In order to confirm the effect of the side sill structure according to the present invention, a collision test according to the following finite element analysis (FEM analysis) was performed. FIGS. 16(a) to 16(e) illustrate test specimens and test conditions of examples and comparative examples. In each of FIGS. 16(a) to 16(e), the left diagram is a cross-sectional view of the side sill in the vehicle width direction, and the right diagram is a horizontal cross-sectional view of the side sill and illustrates a collision position of the collision object (pole) with the side sill and a position of the floor cross member. In this collision test, the side sill and an impact absorption member (impact-absorbing structure 2 in the examples) of the vehicle side structure were used as test specimens, and collision energy absorption characteristics were evaluated. In addition, the floor cross member and the battery case side member adjacent to the side sill were used as a rigid jig for fixing the test specimen, and a load transferred to the jig was evaluated by the contact reaction force.

In the collision test, as illustrated in FIG. 16, the collision object (pole) having a curvature of R127 mm was caused to collide perpendicularly to the longitudinal direction of the test specimen at an initial speed of 30.9 km/h and a maximum intrusion amount of 100 mm. The collision energy at this time was 25 kJ. A fixing jig of the side sill on an opposite side of the collision object includes a floor cross member simulation part (corresponding to the floor cross member 8) that simulates the vehicle body side structure illustrated in FIG. 3, a battery case wall (corresponding to the battery case side member 90), and a battery case lower portion (corresponding to the battery case bottom plate 91 and the mounting flange 92). The battery case lower portion is fixed to the side sill inner with a fixing bolt (corresponding to the fixing bolt 11). The width wa of the floor cross member simulation part in the vehicle front-rear direction was 80 mm. Table 1 gives strength levels and thicknesses of steel sheets used for the respective members of the test specimens in the examples and the comparative examples.

### [Table 1]

**Table 1**

| | Strength level | Thickness |
|---|---|---|
| Side sill 1 | 1470 MPa grade | 1.6 mm |
| Cross-section hollow member 4 | 1470 MPa grade | 1.0 mm |
| Bulkhead 6 | 1180 MPa grade | 1.6 mm |

In the test specimen of Example 1 illustrated in FIG. 16(a), the bulkhead 6ₓ is provided in two locations in an area within the width of the floor cross member simulation part (corresponding to the floor cross member 8) in the impact-absorbing structure 2. The bulkhead 6_{y} of the bulkhead set including two bulkheads provided adjacent to each other is provided in an area outside the width of the floor cross member simulation part on both sides. The interval w1 between the two adjacent bulkheads 6ₓ was set to 35 mm, and the ratio w1/wa of the interval w1 to the width wa of the floor cross member was set to 0.44. In addition, the interval w2 between the bulkhead 6ₓ and the bulkhead 6_{y} adjacent to this bulkhead 6ₓ is larger than w1 and 254 mm or less, and was set to 125 mm that is about 1/2 of 260 mm, which is the assumed installation interval of the floor cross members (interval wb between adjacent floor cross members). Further, the interval w4 between the bulkheads configuring the bulkhead set as the bulkhead 6_{y} was set to 35 mm that is the same as the interval w1.

The test specimen of Example 2 illustrated in FIG. 16(b) is obtained by removing the bulkhead 6_{y} in Example 1, and the bulkhead 6 is provided only in two locations in the area within the width of the floor cross member simulation part (corresponding to the floor cross member 8) in the impact-absorbing structure 2. The test specimen of Comparative Example 1 illustrated in FIG. 16(c) is obtained by removing the bulkhead 6 from the structure of the impact-absorbing structure 2 of Example 2. In the test specimen of Comparative Example 2 illustrated in FIG. 16(d), only the bulkhead is provided inside the side sill. The bulkhead is provided in two locations in the area within the width of the floor cross member simulation part. Furthermore, the bulkhead set including two bulkheads provided adjacent to each other is provided in the area outside the width of the floor cross member simulation part on both sides. The test specimen of Comparative Example 3 illustrated in FIG. 16(e) was a test specimen including only the side sill without arranging the impact absorption member inside the side sill.

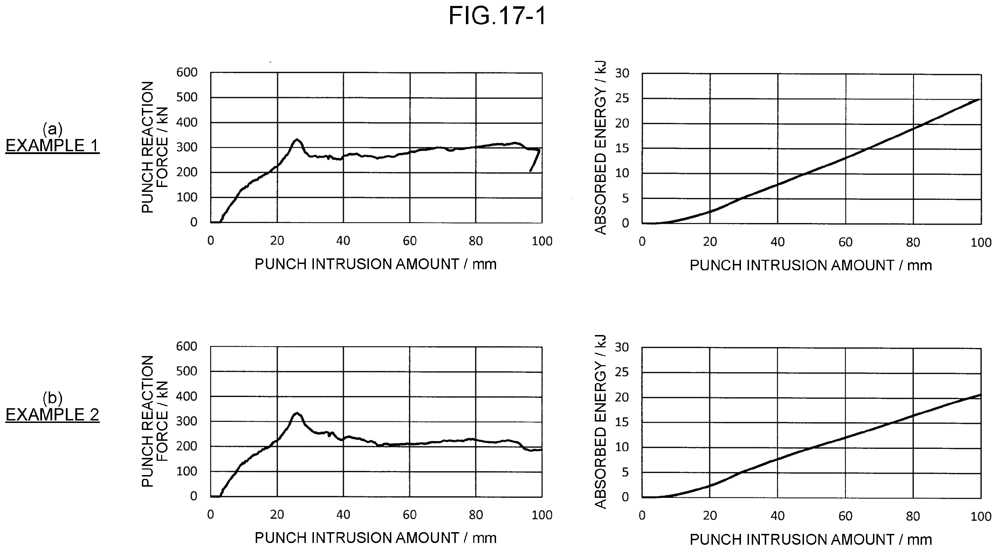

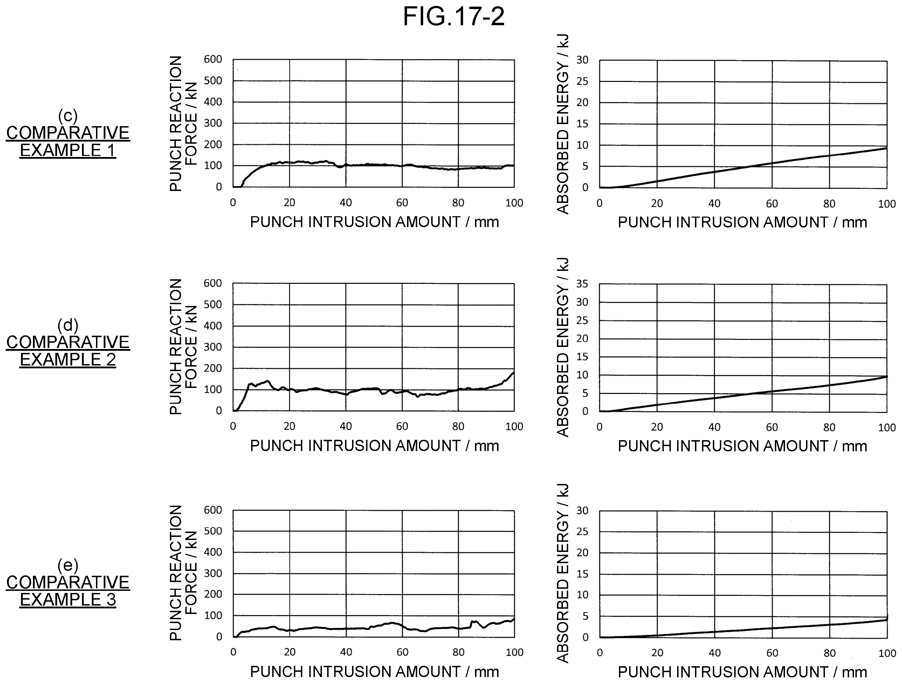

FIGS. 17(a) to 17(e) illustrate a relationship between the intrusion amount of the collision object (punch) into the side sill in the collision test and the force (punch reaction force) received by the collision object, and transition of absorbed energy with respect to the intrusion amount of the collision object (punch) in the examples and the comparative examples. The absorbed energy was calculated by subtracting kinetic energy calculated by a collision object speed from the collision energy (25 kJ). While a stroke of the collision object was 100 mm at the maximum, in Example 1 illustrated in FIG. 17(a), the collision object stopped (99 mm) before the collision object reached the maximum intrusion amount of 100 mm, and the absorbed energy by the side sill structure of Example 1 was 25.0 kJ. On the other hand, in Example 2 and Comparative Examples 1 to 3 illustrated in FIGS. 17(b) to 17(e), the collision object reached its maximum stroke of 100 mm before the absorbed energy reached 25.0 kJ (absorbed energy in Example 1).

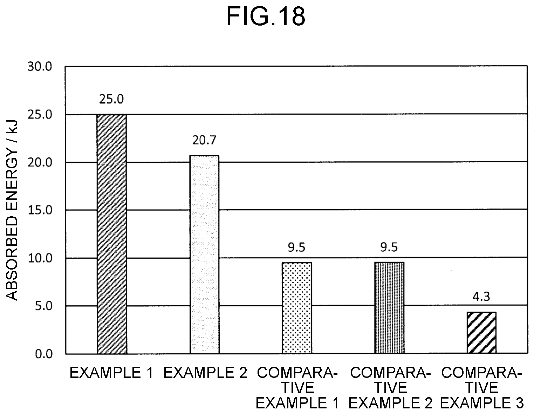

FIG. 18 illustrates comparison of the absorbed energy at the time of maximum intrusion of the collision object in the above-described examples and comparative example. The maximum intrusion amount was 99 mm in Example 1, and 100 mm (maximum intrusion amount of the collision object) in all of Example 2 and Comparative Examples 1 to 3. The absorbed energy in Example 1 was 5.8 times that of Comparative Example 3 in which only the side sill was provided, 2.6 times that of Comparative Example 1 in which the bulkhead was not provided and Comparative Example 2 in which only the bulkhead was provided, and about 1.3 times the total of 19.0 kJ of Comparative Example 1 and Comparative Example 2. Still more, in Example 2, since the number of bulkheads installed in the vehicle front-rear direction is smaller than that in Example 1, the absorbed energy was reduced by 17% as compared with Example 1, but was 4.8 times as large as that in Comparative Example 3, and 2.2 times as large as that in Comparative Example 1 and Comparative Example 2. Further, the absorbed energy was about 1.1 times the total of Comparative Example 1 and Comparative Example 2.

From the results of the above examples and comparative examples, it has been confirmed that, in the automotive side sill structure according to the present invention, extremely excellent collision characteristics exceeding the effect of simply adding the collision energy absorption property of Comparative Example 1 (side sill structure in which only the cross-section hollow member is provided in the side sill) and Comparative Example 2 (side sill structure in which only the bulkhead is provided in the side sill) can be obtained. Further, from the results of Example 1 and Example 2, it has been confirmed that the collision characteristics are further improved by arranging the plurality of bulkheads not only in the area within the width of the floor cross member but also in other areas in the vehicle front-rear direction.

### Industrial Applicability

According to the present invention, it is possible to provide an automotive side sill structure that can obtain high collision energy absorption characteristics with a small amount of collision deformation while suppressing an increase in weight due to structural members. It is also easy to assemble, requires less assembly man-hours, and is also advantageous for increasing a degree of freedom in designing an impact-absorbing structure.

### Reference Signs List

- 1: SIDE SILL
- 1a: SIDE SILL OUTER
- 1b: SIDE SILL INNER
- 2: IMPACT-ABSORBING STRUCTURE
- 3: CLOSED SECTIONAL SPACE
- 4: CROSS-SECTION HOLLOW MEMBER
- 4a: CROSS-SECTION GROOVED MEMBER
- 4b: LID STRUCTURE
- 4c: CROSS-SECTIONAL HOLLOW MEMBER
- 4d: CROSS-SECTION GROOVED MEMBER
- 4e: LID STRUCTURE
- 5: CLOSED SECTIONAL SPACE
- 6, 6ₓ, 6_{y}: BULKHEAD
- 7: FLOOR PANEL
- 8: FLOOR CROSS MEMBER
- 9: BATTERY CASE
- 10: BATTERY PACK
- 11: FIXING BOLT
- 12: JOINT PORTION
- 13: ADHESIVE
- 15, 15A, 15B: SUPPORT STRUCTURE
- 40: LONGITUDINAL SURFACE PORTION
- 41, 41A, 41B: LATERAL SURFACE PORTION
- 42: FLANGE
- 43: WIDE SIDE PORTION
- 44: NARROW SIDE PORTION
- 60: BEAD
- 61: FLANGE
- 70: FLANGE
- 90: BATTERY CASE SIDE MEMBER
- 91: BATTERY CASE BOTTOM PLATE
- 92: MOUNTING FLANGE
- 100: LONGITUDINAL SURFACE PORTION
- 101A, 101B: LATERAL SURFACE PORTION
- 102: FLANGE
- 150: WIDE SIDE PORTION
- 151: NARROW SIDE PORTION
- 152: INCLINED SURFACE PORTION

## Claims

1. An automotive side sill structure comprising:
a side sill (1) extending in a vehicle front-rear direction on both sides of a vehicle lower part; and
an impact-absorbing structure (2) disposed in a closed sectional space (3) in the side sill (1), wherein
the impact-absorbing structure (2) includes:
a cross-section hollow member (4) whose inside forms a closed sectional space (5), the cross-section hollow member (4) being provided along the vehicle front-rear direction in the closed sectional space (3) so as to vertically partition the closed sectional space (3), and
bulkheads (6) provided along a vehicle width direction in the closed sectional space (5) of the cross-section hollow member (4) in a plurality of locations spaced apart in a vehicle longitudinal direction in the closed sectional space (5) so as to partition the closed sectional space (5), and
each of the bulkheads (6) is joined to an inner wall of the cross-section hollow member (4).

2. The automotive side sill structure according to claim 1, wherein each of the bulkhead (6) is joined to, among inner walls of the cross-section hollow member (4), at least an inner wall of a longitudinal surface portion (40) on a vehicle inner side and an inner wall of an upper lateral surface portion (41A) and/or an inner wall of a lower lateral surface portion (41B).

3. The automotive side sill structure according to claim 1 or 2, wherein
the bulkheads (6) include bulkheads (6ₓ) provided in an area that is within a width of a floor cross member in the vehicle front-rear direction, and a bulkhead (6_{y}) provided in an area that is outside the width of the floor cross member,
in the vehicle front-rear direction,
the bulkheads (6ₓ) are provided in two or more locations in the area that is within the width of the floor cross member, and the bulkhead (6_{y}) is provided in one or more locations in the area that is outside the width of the floor cross member, and
when two adjacent bulkheads (6ₓ) are provided at an interval of w1 and the bulkhead (6ₓ) and the bulkhead (6_{y}) adjacent to the bulkheads (6ₓ) are provided at an interval of w2, w1 < w2 is satisfied.

4. The automotive side sill structure according to claim 3, wherein at least a part of the bulkheads (6_{y}) is a bulkhead set including two or more bulkheads adjacent to each other.

5. The automotive side sill structure according to any one of claims 1 to 4, wherein the longitudinal surface portion (40) of the cross-section hollow member (4) and a longitudinal surface portion (100) of the side sill (1) facing the longitudinal surface portion (40) are joined.

6. The automotive side sill structure according to any one of claims 1 to 4, wherein
the longitudinal surface portion (40) of the cross-section hollow member (4) and the longitudinal surface portion (100) of the side sill (1) facing the longitudinal surface portion (40) abut on each other or face each other at a predetermined interval, and
the cross-section hollow member (4) is supported by the side sill (1) via a support structure (15).

7. The automotive side sill structure according to any one of the claims 1 to 6, wherein a bead is formed on a lateral surface portion (41) of the cross-section hollow member (4) and/or the bulkheads (6).

8. The automotive side sill structure according to any one of claims 1 to 7, wherein the impact-absorbing structure (2) is formed of a metal plate having a tensile strength of not less than 590 MPa grade.
